(19)

Europäisches
Patentamt
European
Patent Office
Office européen
des brevets

(11) **EP 3 653 429 A1**

(12) **EUROPEAN PATENT APPLICATION**

(43) Date of publication:
**20.05.2020 Bulletin 2020/21**

(51) Int Cl.:
***B60L 53/30*** (2019.01)   ***B60L 53/63*** (2019.01)

(21) Application number: **18207111.8**

(22) Date of filing: **19.11.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Vestel Elektronik Sanayi ve Ticaret A.S.
45030 Manisa (TR)**

(72) Inventor: **DÖNER, Çagdas
45030 Manisa (TR)**

(74) Representative: **Flint, Adam
Page White & Farrer
Bedford House
John Street
London WC1N 2BF (GB)**

(54) **ELECTRIC VEHICLE CHARGING STATION, METHOD AND METHOD OF OPERATING A MOBILE DEVICE**

(57)    An electric vehicle charging station (10) has one or more charging points (12) for charging rechargeable batteries (24) of electric vehicles (20). The charging rate for power supplied to a vehicle (20) is based on at least an expected collection time at which a user associated with the vehicle (20) is expected to collect the vehicle (20). The expected collection time is based on at least the current location of the user. The current location of the user may be provided by a mobile device (50).

Fig. 1

**Description**

Technical Field

The present disclosure relates to an electric vehicle charging station, method of operating an electric vehicle charging station, a method of operating a mobile device and a computer program therefor.

Background

Electric vehicles, including purely electric vehicles, which only use an electric motor for propulsion, and hybrid vehicles, which have both an internal combustion engine and an electric motor for propulsion, typically have one or more rechargeable batteries for storing electric charge for the electric motor. Owing to the limited storage capacity of such batteries, the batteries need to be charged frequently. For this, the user typically connects the vehicle to a charging point on an electric vehicle charging station. Various criteria may be applied to determine the charging rate, i.e. the rate at which the charging station delivers electrical power to recharge the battery. Such criteria may include the current cost of the electrical power (for example, at that particular time of day), a request from the user for a fast charge, and load balancing by which the electrical power delivered to plural electric vehicles connected to the charging station is distributed between the electric vehicles.

Summary

According to a first aspect disclosed herein, there is provided a method of operating an electric vehicle charging station, the method comprising:
setting the charging rate for electric power being delivered to charge a rechargeable battery of an electric vehicle which is connected to a charging point of the charging station based on at least an expected collection time at which a user associated with the vehicle is expected to collect the vehicle, in which the expected collection time is based on at least the current location of the user.

In examples, this enables an electric vehicle to be recharged at a rate that is most appropriate for its user depending on the expected time that the user is likely to collect the vehicle. The charging rate can be set and adjusted depending on the user's location, which is used to determine the time that the user is likely to collect the vehicle.

In an example, the expected collection time is based on at least the current location of the user as provided by a mobile device associated with the user.

In an example, the expected collection time is based on at least the current location of the user and historical data concerning the duration of previous visits by the user and/or other users to the current location.

In an example, the charging rate for electric power being delivered to the electric vehicle is set additionally based on the current state of charge of the rechargeable battery of the vehicle.

In an example, the charging station comprises plural charging points, the method comprising setting the charging rates for electric power being delivered to a plurality of electric vehicles connected to respective charging points of the charging station based on at least an expected collection time at which a user associated with one of the vehicles is expected to collect said vehicle.

According to a second aspect disclosed herein, there is provided an electric vehicle charging station, the charging station comprising:

a charging point to which an electric vehicle can be connected to charge a rechargeable battery of the vehicle;
the charging station being constructed and arranged to set the charging rate for electric power being delivered to an electric vehicle connected to the charging point based on at least an expected collection time at which a user associated with said vehicle is expected to collect said vehicle, wherein the expected collection time is based on at least the current location of the user:

In an example, the expected collection time is based on at least the current location of the user as provided by a mobile device associated with the user.

In an example, the charging rate for electric power being delivered to a said electric vehicle is set additionally based on the current state of charge of the rechargeable battery of said vehicle.

In an example, the charging station comprises plural charging points, the charging station being constructed and arranged to set the charging rates for electric power being delivered to a plurality of electric vehicles connected to respective charging points of the charging station based on at least an expected collection time at which a user associated with one of said vehicles is expected to collect said vehicle, wherein the expected collection time is based on at least the current location of the user.

According to a third aspect disclosed herein, there is provided a method of operating a mobile device associated with a user, the method comprising:

the mobile device reporting its location to at least one of an electric vehicle charging station and a back-end server which is in communication with and providing service for an electric vehicle charging station, such that a said charging station can set the charging rate for electric power being delivered to charge a rechargeable battery of an electric vehicle associated with the user and connected to a charging point of the charging station based on at least an expected collection time at which a user associated with the vehicle is expected to collect the vehicle, the expected collection time being based on at least the current location of the user.

In an example, the method comprises the mobile device periodically reporting its location to at least one of an electric vehicle charging station and a back-end server.

In an example, the method comprises the mobile device reporting its location to at least one of an electric vehicle charging station and a back-end server in response to a request for its location received from said electric vehicle charging station or back-end server.

According to a fourth aspect disclosed herein, there is provided a computer program comprising instructions such that when the computer program is executed on a mobile device, the mobile device is arranged to report its location to at least one of an electric vehicle charging station and a back-end server which is in communication with and providing service for an electric vehicle charging station, such that a said charging station can set the charging rate for electric power being delivered to charge a rechargeable battery of an electric vehicle associated with the user and connected to a charging point of the charging station based on at least an expected collection time at which a user associated with the vehicle is expected to collect the vehicle, the expected collection time being based on at least the current location of the user.

There may be provided a non-transitory computer-readable storage medium storing a computer program as described above.

In an example, the computer program instructions such that the mobile device periodically reports its location to at least one of an electric vehicle charging station and a back-end server.

In an example, the computer program instructions such that the mobile device reports its location to at least one of an electric vehicle charging station and a back-end server in response to a request for its location received from said electric vehicle charging station or back-end server.

Brief Description of the Drawings

To assist understanding of the present disclosure and to show how embodiments may be put into effect, reference is made by way of example to the accompanying drawings in which:

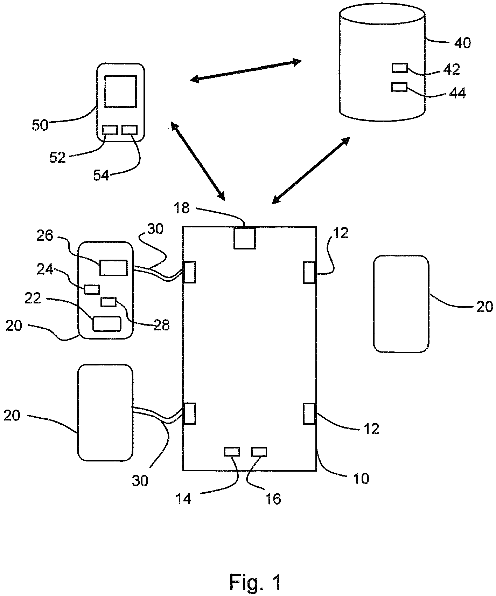

Figure 1 shows schematically a plan view from above of an example of an electric vehicle charging station, a mobile device, a back-end server and a number of electric vehicles.

Detailed Description

Unless the context requires otherwise, the term "electric vehicle" is used herein to describe any vehicle that uses, in part or exclusively, electric power to propel the vehicle. This includes purely electric vehicles, which only use an electric motor for propulsion, and hybrid vehicles, which have both an internal combustion engine and an electric motor for propulsion. The electric vehicle may be for example an automobile, a car, a bus or coach, a lorry, a motorcycle, etc.

Electric vehicles typically have one or more rechargeable batteries for storing electric charge for the electric motor. The batteries require frequent charging because the range of the vehicle, i.e. the distance that can be covered before recharging, is often limited because of the limited capacity of the battery to store electric charge. Fixed charging stations, which commonly use cables to connect to the rechargeable battery, may be available at the vehicle owner's own premises or work place and in public areas, especially in towns and cities

The rate at which electrical power is delivered by the charging station in known systems can be varied depending on one or more of a number of factors. This may include for example the current cost of the electrical power (for example, at that particular time of day), a request from the user for a fast charge, and load balancing by which the electrical power delivered to plural electric vehicles connected to the charging station is distributed between the electric vehicles.

By way of further background, at least some existing electric vehicle charging stations already set and adjust the charging rate for delivering electric power to a vehicle to charge its battery according to one or more criteria. As a particular example where plural electric vehicles are being charged by a charging station, load balancing is often used. In this, the charging station automatically divides the power that is available between the vehicles that are being charged. The charging station, or a back-end server which controls the charging station and possibly other charging stations, analyses the available charge capacity and how much power each of the vehicles requires, and divides the power between the vehicles accordingly. This load balancing may also take into account the current price of the power, the current demands for power on the charging stations, local power supply regulations, etc. As another example, the power being provided to an individual electric vehicle to charge its battery may be set or adjusted depending on for example the current cost of the electrical power (for example, at that particular time of day) or a request from the user for a fast charge.

As a particular example for enabling remote control of charging stations, the Open Charge Point Protocol (OCPP) is an application protocol for communication between electric vehicle charging stations and a central management system or back-end server, also known as a charging station network. This may use for example SOAP (Simple Object Access Protocol) and/or WebSocket as a messaging or communications protocol. The OCPP has (currently) been well adopted in Europe and Asia in particular.

However, all of these existing systems for setting and adjusting the power that is delivered by a charging station to charge an electric vehicle's battery, whether individually for a particular user's vehicle or for load-balancing across several vehicles being charged at a charging station, are relatively static or cumbersome for the user. The existing systems cannot adapt to changing needs of a user, at least not without a manual intervention by the user (to request a fast charge for example).

In overview in some examples described herein, the charging rate for electric power being delivered to a vehicle connected to a charging point of a charging station is based on at least an expected collection time at which a user associated with the vehicle is expected to collect the vehicle, which, in turn, is based on the location of the user. This enables the charging rate to be better aligned with the user's needs. The process may be entirely automated such that the user does not have to manually intervene in order to get the charging rate set or adjusted.

Referring now to Figure 1, this shows schematically a plan view from above of an example of an electric vehicle charging station 10. The charging station 10 has at least one charging point 12 to which an electric vehicle can be connected to charge a rechargeable battery of the vehicle. There may be plural charging points 12. Known electric vehicle charging stations commonly have between one and eight charging points, but in general there may be any number.

The charging station 10 has a processor 14 for running computer programs, data storage and memory 16 for storing computer programs and data and providing working memory for the processor 14, etc. The charging station 10 has a communications interface 18 which allows the charging station 10 to communicate with other devices. The communications interface 18 may provide a wired connection and/or a wireless connection for communicating with other devices. The connection may be via one or more of the internet, a cellular network, a local area network, etc.

Figure 1 also shows three electric vehicles 20. Each electric vehicle 20 has an electric motor 22 for driving one or more wheels of the vehicle 20. Each vehicle 20 has at least one rechargeable battery 24 for storing electric power for at least powering the electric motor 22. Each vehicle 20 has a processor 26 for running computer programs, data storage and memory 28 for storing computer programs and data and providing working memory for the processor 26, etc. Two of the electric vehicles 20 are shown connected to respective charging points 12 of the charging station 10 via charging cables 30.

Figure 1 also shows for this example a back-end server 40. The back-end server 40 has a processor 42 for running computer programs, data storage and memory 44 for storing computer programs and data and providing working memory for the processor 42, etc.

As will be discussed further below, the back-end server 40 is used in this example to store data concerning users and their electric vehicles and to provide commands to the charging station 10. The back-end server 40 in this example can therefore communicate with the charging station 10, via the communications interface 18 of the charging station 10, using wired and/or wireless connections. The back-end server 40 may be remote from the charging station 10 and located in the "cloud". The back-end server 40 may provide commands to other charging stations. The use of such a back-end server 40 increases the flexibility and usability of the system, as will become clear. The following description will assume that a back-end server 40 is used for receiving, storing and processing at least some data and for issuing at least some commands, etc. to the charging station 10. However, in other examples, a back-end server 40 is not necessary, and all communication and control can be directly with and by the charging station 10.

Figure 1 also shows a user device 50. The user device 50 has a processor 52 for running computer programs, data storage and memory 54 for storing computer programs and data and providing working memory for the processor 52, etc. The user device 50 of this example also has a display screen 56 for displaying information, etc. for the user. The user device 50 is associated with a user, such as an owner or driver, of one of the vehicles 20. The user device 50 is capable of communicating with the back-end server 40 if provided and/or with the charging station 10 via the communications interface 18.

The user device 50 is conveniently a cellular device, such as a mobile phone, which can connect to a cellular network. The user device 50 may be a "smart" phone which can also connect to the internet. Conveniently, all communications between the user device 50 and the charging station 10, and the back-end server 40 if provided, may be via one or more cellular networks, though other wired and/or wireless networks, including the internet, may be used instead or in addition. For example, the user device 50 may be some other, simpler device, which can provide its location to the back-end server 40. The back-end server 40 if provided and the charging station 10 may operate in accordance with the Open Charge Point Protocol (OCPP).

In use, as a preliminary, a user of an electric vehicle 20 registers their electric vehicle 20 with the back-end server 40. This may be carried out by for example an online registration process. In the case that the user device 50 is a smart phone or the like, the user may download software or an "app" to their user device 50 which provides for communication with the back-end server 40. In some examples, the app also enables the user to register their vehicle 20 with the back-end server 40.

The user can then connect their electric vehicle 20 to a charging point 12 on the charging station 10. The charging station 10, either directly or via the back-end server 40, recognises the vehicle 20, by for example querying or reading identification data from the vehicle 20.

At this point, an initial charging rate to charge the battery 24 of the vehicle 20 may be set. This may be a default value and/or may be a value that is set in order to properly balance the charging load if multiple vehicles 20 are being charged by the charging station 10. In the case of a default value, this may be a default value that is initially applied for all vehicles 20 (possibly subject to load balancing). Alternatively, it may be a default value based on historical charging data relating to that specific electric vehicle 20 and/or user. Such historical charging data may be stored locally at the charging station 10 and/or remotely at the back-end server 40. The historical data may indicate for example that the user typically charges their vehicle 20 for a specific period of time, of say an hour or 3 hours, etc., whether at that specific charging station 10 or at charging stations 10 generally.

However, in accordance with examples described herein, the user's location is then effectively tracked. The charging rate for power being delivered to the user's vehicle 20 is then set or adjusted based on at least an expected collection time at which the user is expected to collect the vehicle 20. That expected collection time is based on at least the current location of the user.

To elaborate, the user may be on a shopping trip and is visiting a shopping mall. After parking their vehicle 20 and connecting the vehicle 20 to the charging station 10, the user then walks to the shopping mall. The user's location is reported to the back-end server 40. As will be discussed further below, in an example, the identification of the user's current location and the reporting of the current location is carried out by the user's user device 50. However, this could be carried out using other technology, using for example some simple device that can report the user's location or using face-tracking video technology and cameras in the location. In any event, based on the user's current location, the back-end server 40 "knows" that the user will typically be at that location for one hour or so before returning to collect their vehicle 20. The charging rate for charging the vehicle can therefore be set at a high or maximum rate so as to achieve a full charge within an hour.

As another example, the user may have driven to a workplace. After parking their vehicle 20 and connecting the vehicle 20 to the charging station 10, the user then walks to the workplace. The user's location is reported to the back-end server 40. Based on the user's current location, the back-end server 40 "knows" that the user will typically be at that location for seven hours or so before returning to collect their vehicle 20. The charging rate for charging the vehicle can therefore be set at a low rate to achieve a full charge within seven hours. (This lower charging rate may be at a lower cost to the user and/or allows load-balancing to be carried out such that other vehicles 20 at the charging station 10 may be charged more quickly.)

The data concerning the time that the user is expected to be at a particular location, which therefore affects and indeed controls the expected collection time for the vehicle 20, may be obtained in a number of ways. In one example, the data may be prestored at the back-end server 40 and/or charging station 10 such that any visitor to that location is expected to be at that location for the same period of time. In another example, historical data concerning previous visits to that location by that user may be stored and used to base the decision on how long the user is expected to be at that location. This can be extended to take into account other factors. For example, there are proposals for so-called smart refrigerators or the like to inform a user when certain food items are running low. That information may be used in the case that for example the location is a supermarket or the like and that the user's visit there may be long or short depending on the number of food items that need to be purchased. As another example, there are proposals for a device, such as a user device, to be able to determine a user's mood and to act differently depending on the user's mood. For example, there are proposals that determine a user's mood from how they interact with their user device. This information can be used to determine for example that the user is in a hurry, and that therefore the time that the user is expected to be at a particular location may be shorter than usual. In any event, determining the time that the user is expected to be at a particular location may use for example machine learning or artificial intelligence technology, at the back-end server 40 and/or charging station 10. The back-end server 40 and/or charging station 10 may store relevant data for different locations, possibly on a per user basis or for users generally.

Another factor that affects the expected collection time for the vehicle 20 is the time that the user is likely to take in returning to the charging station 10 from the current location. For this, the back-end server 40 and/or charging station 10 knows the location of the charging station 10 and the current location of the user. The back-end server 40 and/or charging station 10 can therefore know, either from historical data for that user or other users, or by pre-stored data, how long it is likely to take the user to return from the current location to the charging station, and can factor that in to the calculation of the expected collection time.

A factor that may be used to set the charging rate for power to be delivered to the vehicle 20 is the current state of charge of the vehicle battery 24. The charging rate may be set so as to achieve a maximum charge for the vehicle battery 24 by the expected collection time of the vehicle 20. For this, when the vehicle 20 is connected to the charging station 10, the charging station 10 may read the current state of charge of the vehicle battery 24. This may be carried out using a Controller Area Network (CAN) interface between the vehicle 20 and the charging point 12 of the charging station 10. (Clearly, there may not always be sufficient time for a full charge to be achieved, in which case the charging station 10 may be set to deliver power at the maximum permitted charging rate so as to achieve the best charge possible.)

To illustrate this, the back-end server 40 and/or charging station 10 may store data in table form along the following lines:

|  | Barbershop | Cafe | Sports Centre | Business Centre |
|---|---|---|---|---|
| Spent time | 1 hour | 30 minutes | 2 hours | 7 hours |
| Time to Charging Station | 10 minutes | 20 minutes | 30 minutes | 10 minutes |
| Charge Power | 85% | 100% | 40% | 14% |

The back-end server 40 and/or charging station 10 may calculate the charging rate or power as a proportion of the maximum permitted charging rate in accordance with the following:

$$\text{Charge power} = \frac{\text{(time required for full charge)}}{\text{(time spent at location + time to charging station)}}$$

(subject to a maximum of 100% of the maximum permitted charging rate).

To illustrate this by way of example, the back-end server 40 and/or charging station 10 may receive location information for the user that indicates that the user is at a cafe or coffee shop and is therefore likely to be there for around 30 minutes. Again, it is emphasised that the back-end server 40 and/or charging station 10 may know that the location is a cafe because that location is known to be a cafe, based on for example prestored data at the back-end server 40 and/or charging station 10. Alternatively, the back-end server 40 and/or charging station 10 may simply know that the user typically spends 30 minutes at that specific location, without knowing that that location is a cafe as such. The back-end server 40 and/or charging station 10 also knows that it typically takes a person 20 minutes to return from that location to the charging station 10. Finally, the back-end server 40 and/or charging station 10 has calculated that the vehicle battery 24 would take 1 hour to fully recharge at the maximum permitted charging rate. In view of this, the charging station 10 is set to deliver power at the maximum permitted charging rate.

On the other hand, the back-end server 40 and/or charging station 10 may receive location information for the user that indicates that the user is at a sports centre. The user is therefore expected to be there for 2 hours, and, in this example, will take a further 30 minutes to return to the charging station 10. Assume again that the back-end server 40 and/or charging station 10 has calculated that the vehicle battery 24 would take 1 hour to fully recharge at the maximum permitted charging rate. In view of this, the charging station 10 is set to deliver power at 40% of the maximum permitted charging rate (60 mins / (120 + 30 mins)).

In order to obtain the user's current location so as to set or adjust the charging rate, and to track the user's current location again so as to adjust the charging rate, a number of options are possible. For example, cameras are often provided in public or private areas for security reasons. The outputs from such cameras may be subject to face-tracking technology to enable a user's movements to be followed.

However, a more convenient option, and which is less likely to raise privacy and similar concerns, is for the user device 50 to report its location to the back-end server 40 and/or charging station 10. Depending on the implementation and particular type of device, the user device 50 may know its location from one or more of GPS (Global Positioning System) or other global navigation satellite system (GNSS), the cell in which a cellular user device 50 is located, interactions with neighbouring location beacons, etc. The user device 50 can be arranged to report its location to the back-end server 40 and/or charging station 10 periodically, such as every few seconds or every few minutes. Alternatively or additionally, the user device 50 can be arranged to report its location to the back-end server 40 and/or charging station 10 in response to a polling request from the back-end server 40 and/or charging station 10.

Further on this, the back-end server 40 and/or charging station 10 may detect from the user's location that the user is returning to collect the vehicle 20 sooner than expected. Following the example above, if the user was identified as being at a sports centre and therefore would be away for 2 hours 30 minutes and the vehicle would require a charge at the maximum permitted rate for one hour, then the charging rate was set at 40% of the maximum. However, the user may leave sooner than this. The back-end server 40 and/or charging station 10 may then note that the user's location has changed and that the user is returning to the charging station 10. In that case, the back-end server 40 and/or charging station 10 can increase the charging rate, possibly to the maximum permitted rate, so that the vehicle battery 24 is charged as fully as possible.

It should be noted that during all of this, the user does not need to interact with the back-end server 40 and/or charging station 10 to set or change the charging rate. The back-end server 40 and/or charging station 10 makes the decisions as to the appropriate charging rate to use depending on the expected collection time of the vehicle 20 as based on the current location of the user, and can do so even if that current location changes during recharging.

Furthermore, this can enable better and fairer load-balancing in the case that plural vehicles 20 are connected to the charging station 10 to be recharged. Currently, load balancing is typically very simplistic. For example, the total available power is often simply distributed equally across all vehicles being charged. In another current proposal, a new vehicle may be connected to a charging station. If the charging station 10 is already providing the maximum total available power to the plural vehicles that are being charged, then power to one or more of the vehicles has to be lowered to enable the new vehicle to be charged. In that case, the current proposal is that if another vehicle connected to the charging station is almost fully charged or at least say half charged, then the charging rate to that already-connected vehicle is lowered or even reduced to zero so as to enable the new vehicle to be charged. However, none of this takes into account when the users of any of the vehicles will actually return to collect their vehicles. In accordance with examples described herein, a vehicle is charged at a rate that is most convenient for its user, based on the expected collection time for that vehicle. The back-end server 40 and/or charging station 10 may for example charge a vehicle at a low charging rate if it determines that the user will not return for some hours, because for example the user is at their workplace as determined by the location of that user, which allows higher charging rates to be delivered to other vehicles when required.

When setting or adjusting the charging rate for a particular vehicle 20, the back-end server 40 and/or charging station 10 may only make changes relatively slowly (such as every minute or every 5 or 10 minutes or so), so as to avoid charging rates being frequently adjusted. For example, it was mentioned above that a certain initial charging rate may be set when a user first connects their vehicle 20 to the charging station 10. The back-end server 40 and/or charging station 10 may wait a few minutes before reading the user's location and (possibly) adjusting the charging rate in order to allow the user time to reach a destination. Likewise, the back-end server 40 and/or charging station 10 may wait a few minutes before reading the user's location again and (possibly) adjusting the charging rate.

In summary, examples described herein enable an electric vehicle to be recharged at a rate that is most appropriate for its user depending on the expected time that the user is likely to collect the vehicle. The charging rate can be set and adjusted depending on the user's location, which is used to determine the time that the user is likely to collect the vehicle. This can be an effectively continual or continuous process in that the charging rate can be adjusted to better meet the user's needs as the user's location changes. The setting and adjusting of the charging rate can be an automatic process which requires no manual intervention by the user. A learning process, using machine learning or artificial intelligence, can be used to predict the expected collection time based on historical data for the locations for that specific user and/or users generally.

It is emphasised that in the above, it was largely assumed that a back-end server 40 is used for receiving, storing and processing at least some data and for issuing at least some commands, etc. to the charging station 10. This has advantages in that for example charging stations may have little storage capacity to store lots of data and low processing power to process the data. Also, a back-end server 40 can collect data from numerous users and numerous charging stations, enabling better and more informed decisions to be made (using for example machine learning or artificial intelligence techniques). However, in other examples, a back-end server 40 is not necessary, and all communication and control can be directly with and by the charging station 10.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

**Claims**

1. A method of operating an electric vehicle charging station, the method comprising:
   setting the charging rate for electric power being delivered to charge a rechargeable battery of an electric vehicle which is connected to a charging point of the charging station based on at least an expected collection time at which a user associated with the vehicle is expected to collect the vehicle, in which the expected collection time is based on at least the current location of the user.

2. A method according to claim 1, wherein the expected collection time is based on at least the current location of the user as provided by a mobile device associated with the user.

3. A method according to claim 1 or claim 2, wherein the expected collection time is based on at least the current location of the user and historical data concerning the duration of previous visits by the user and/or other users to the current location.

4. A method according to any of claims 1 to 3, wherein the charging rate for electric power being delivered to the electric vehicle is set additionally based on the current state of charge of the rechargeable battery of the vehicle.

5. A method according to any of claims 1 to 4, wherein the charging station comprises plural charging points, the method comprising setting the charging rates for electric power being delivered to a plurality of electric vehicles connected to respective charging points of the charging station based on at least an expected collection time at which a user associated with one of the vehicles is expected to collect said vehicle.

6. An electric vehicle charging station, the charging station comprising:

   a charging point to which an electric vehicle can be connected to charge a rechargeable battery of the vehicle; the charging station being constructed and arranged to set the charging rate for electric power being delivered to an electric vehicle connected to the charging point based on at least an expected collection time at which a user associated with said vehicle is expected to collect said vehicle, wherein the expected collection time is based on at least the current location of the user.

7. A charging station according to claim 6, wherein the expected collection time is based on at least the current location of the user as provided by a mobile device associated with the user.

8. A charging station according to claim 6 or claim 7, wherein the charging rate for electric power being delivered to a said electric vehicle is set additionally based on the current state of charge of the rechargeable battery of said vehicle.

9. A charging station according to any of claims 6 to 8, wherein the charging station comprises plural charging points, the charging station being constructed and arranged to set the charging rates for electric power being delivered to a plurality of electric vehicles connected to respective charging points of the charging station based on at least an expected collection time at which a user associated with one of said vehicles is expected to collect said vehicle, wherein the expected collection time is based on at least the current location of the user.

10. A method of operating a mobile device associated with a user, the method comprising:

the mobile device reporting its location to at least one of an electric vehicle charging station and a back-end server which is in communication with and providing service for an electric vehicle charging station, such that a said charging station can set the charging rate for electric power being delivered to charge a rechargeable battery of an electric vehicle associated with the user and connected to a charging point of the charging station based on at least an expected collection time at which a user associated with the vehicle is expected to collect the vehicle, the expected collection time being based on at least the current location of the user.

11. A method according to claim 9, comprising the mobile device periodically reporting its location to at least one of an electric vehicle charging station and a back-end server.

12. A method according to claim 10 or claim 11, comprising the mobile device reporting its location to at least one of an electric vehicle charging station and a back-end server in response to a request for its location received from said electric vehicle charging station or back-end server.

13. A computer program comprising instructions such that when the computer program is executed on a mobile device, the mobile device is arranged to report its location to at least one of an electric vehicle charging station and a back-end server which is in communication with and providing service for an electric vehicle charging station, such that a said charging station can set the charging rate for electric power being delivered to charge a rechargeable battery of an electric vehicle associated with the user and connected to a charging point of the charging station based on at least an expected collection time at which a user associated with the vehicle is expected to collect the vehicle, the expected collection time being based on at least the current location of the user.

14. A computer program according to claim 13, comprising instructions such that the mobile device periodically reports its location to at least one of an electric vehicle charging station and a back-end server.

15. A computer program according to claim 13 or claim 14, comprising instructions such that the mobile device reports its location to at least one of an electric vehicle charging station and a back-end server in response to a request for its location received from said electric vehicle charging station or back-end server.

Fig. 1

Europäisches
Patentamt

European
Patent Office

Office européen
des brevets

## EUROPEAN SEARCH REPORT

Application Number

EP 18 20 7111

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/006137 A1 (MELEN ROGER [US] ET AL) 2 January 2014 (2014-01-02) * paragraphs [0005], [0121], [0133], [0134], [0163]; claims 1,7,9,15,31 * | 1-15 | INV. B60L53/30 B60L53/63 |
| A | WO 2011/156776 A2 (UNIV CALIFORNIA [US]; GADH RAJIT [US] ET AL.) 15 December 2011 (2011-12-15) * the whole document * | 1-15 | |
| A | US 2015/178034 A1 (PENILLA ANGEL A [US] ET AL) 25 June 2015 (2015-06-25) * the whole document * | 1-15 | |

TECHNICAL FIELDS
SEARCHED     (IPC)

B60L

The present search report has been drawn up for all claims

| Place of search | Date of completion of the search | Examiner |
|---|---|---|
| The Hague | 20 May 2019 | Mapp, Graham |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 20 7111

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2019

| Patent document cited in search report | | Publication date | Patent family member(s) | | Publication date |
|---|---|---|---|---|---|
| US 2014006137 | A1 | 02-01-2014 | NONE | | |
| WO 2011156776 | A2 | 15-12-2011 | US 2013179061 | A1 | 11-07-2013 |
| | | | WO 2011156776 | A2 | 15-12-2011 |
| US 2015178034 | A1 | 25-06-2015 | US 9229623 | B1 | 05-01-2016 |
| | | | US 9285944 | B1 | 15-03-2016 |
| | | | US 9372607 | B1 | 21-06-2016 |
| | | | US 9467515 | B1 | 11-10-2016 |
| | | | US 10223134 | B1 | 05-03-2019 |
| | | | US 10286798 | B1 | 14-05-2019 |
| | | | US 2015178034 | A1 | 25-06-2015 |
| | | | US 2016303990 | A1 | 20-10-2016 |
| | | | US 2017190259 | A1 | 06-07-2017 |
| | | | US 2018015835 | A1 | 18-01-2018 |
| | | | US 2018244167 | A1 | 30-08-2018 |
| | | | US 2019061541 | A1 | 28-02-2019 |

EPO FORM P0459

For more details about this annex : see Official Journal of the European Patent Office, No. 12/82